# EUROPEAN PATENT APPLICATION

(11) **EP 1 798 801 A1**
(43) Date of publication of application: **20.06.2007**
(21) Application number: 05780455.1
(22) Date of filing: 22.08.2005
(51) Int. Cl.: H01M 8/16, H01M 4/90, G01N 27/404, G01N 27/327

(54) **FUEL CELL, FUEL CELL USE METHOD, FUEL CELL CATHODE ELECTRODE, ELECTRONIC DEVICE, ELECTRODE REACTION USE DEVICE, AND ELECTRODE REACTION USE DEVICE ELECTRODE**

(30) Priority: 23.08.2004 JP 2004242413; 09.05.2005 JP 2005135726
(71) Applicant: SONY CORPORATION, Tokyo 108-0075 (JP)
(72) Inventor: NAKAGAWA, Takaaki, c/o Sony Corporation, Tokyo 108-0075 (JP); SATO, Atsushi, c/o Sony Corporation, Tokyo 108-0075 (JP); SAKAI, Hideki, c/o Sony Corporation, Tokyo 108-0075 (JP); HATAKEYAMA, Mamoru, c/o Sony Corporation, Tokyo 108-0075 (JP)
(74) Representative: Körber, Martin Hans
(86) International application number: PCT/JP2005/015207
(87) International publication number: WO 2006/022224

(57) **Abstract**

To provide a fuel cell and a method of using the same, which enable such a reaction environment as to exhibit excellent properties as electrode sufficiently, and to provide a cathode for the fuel cell, a device using an electrode reaction, and an electrode for the device using an electrode reaction. A fuel cell 10 includes an electrolyte solution 7 arranged between a cathode 1 and an anode 5. The cathode 1 includes a porous material made typically of carbon and an immobilized thereon. The fuel cell is so configured as to bring at least part of the cathode 1 into contact with a reactant in a gaseous phase. The cathode 1 preferably further includes an immobilized electron-transfer mediator in addition to the enzyme. The reactant in a gaseous phase can be, for example, air or oxygen.

## Description

### Technical Field

The present invention relates to a fuel cell, a method of using a fuel cell, a cathode for a fuel cell, an electronic device, a device using an electrode reaction, and an electrode for a device using an electrode reaction. The present invention is advantageously applied to fuel cells for use as power suppliers for electronic devices such as mobile phones.

### Background Art

Biological metabolism in living beings is a reaction mechanism with high substrate selectivity and remarkably high efficiency. It is characterized by reaction progressing in a relatively moderate atmosphere held at room temperature and neutral. Biological metabolism herein involves aspiration and photosynthesis, among others, which converts oxygen and various nutritional elements such as sugars, fats, oils, and proteins to energy necessary for growth of microorganisms and cells.

Such biological reactions largely rely on biological catalysts made of proteins, namely, enzymes. The idea of using the catalytic reactions of enzymes has been put into practice from early days of the history of humankind.

In particular, ideas and techniques for using immobilized enzymes have been technologically investigated. Densely immobilized enzymes exhibit high catalytic performance even in a small amount, have high specificity, and can be treated as with solid catalysts generally used in chemical reactions. Such densely immobilized enzymes are very useful as the usage of enzymes.

Applications of immobilized enzymes range over many industrial fields including brewing industry, fermentation industry, fiber industry, leather industry, food industry and drug industry. Recently, its applications to the field of electronicssuch asbiosensors,bioreactors,bio-fuelcells,which incorporate the catalytic function into electrode systems, have come to be examined and brought into practice.

Regarding techniques for utilizing biological metabolism in fuel cells, there have been reported microbial cells in which electric energy formed in microorganisms is extracted through an electron mediator out of the microorganisms, and the resulting electrons are transferred to an electrode (for example, JP-A No. 2000-133297). This relates to a technique of using an enzyme for extracting the energy.

On application of enzymes to electrode systems, high-density immobilization of an enzyme on an electrode makes it possible to efficiently catch enzymatic reactions occurring near the electrode as electric signals.

For researches of electrode systems, in general, it is necessary to use an electron-accepting compound behaving as an electron transfer mediator between the protein as the enzyme and the electrode, where intermediation of electrons is unlikely to occur. This electron-accepting compound is preferably immobilized similarly to the enzyme.

To proceed a catalytic action of an enzyme, a reaction is essentially carried out under such conditions as to enable movement of electrons and/or protons. The same is also true for the above-mentioned functional electrodes (enzyme-immobilized electrodes) each carrying an enzyme and an electron-accepting compound immobilized thereon.

Evaluations of such enzyme-immobilized electrodes have been generally carried out in water or a buffer solution, because organic solvents may adversely affect the activities of enzymes.

In this case, a material serving as a reactant in an enzyme-catalyzed reaction is preferably dissolved in water or a buffer solution, because the dissolved reactant may undergo an enzymatic catalytic action more uniformly and more efficiently.

However, when a material serving as a reactant is dissolved in water or a buffer solution, the solubility of a material is a parameter specific to the material, thereby the dissolution of the material is restricted, and this in turn restricts electrode reactions.

Among reactants, oxygen has a very low solubility in a solution (dissolved oxygen concentration) than in air, and this significantly limits electrode reactions. In addition, oxygen much more quickly diffuses in a solution than in air.

As is described above, if water or a buffer solution is used upon use of oxygen as a reactant, electrode reactions have limitations due to the solubility of oxygen in water or a buffer solution. It is therefore significantly desirable to solve this technical problem upon practical use of enzymes in fuel cells.

In addition, the more an enzyme-immobilized electrode exhibits an excellent catalytic action, the more the supply of a reactant material to the electrode limits or controls the rate of an entire reaction. The supply herein is restricted by the specific solubility of the material in water or a buffer solution, and excellent properties of the enzyme-immobilized electrode may not be exhibited sufficiently.

Under these circumstances, a certain technique employs a system using dissolved oxygen in a solution as a reactant and is so configured as to improve functions of an enzyme-immobilized electrode by increasing oxygen partial pressure or stirring a solution to thereby increase an oxygen supply. This technique can be found, for example, in N. Mano, H. H Kim, Y. Zhang and A. Heller, J. Am. Chem. Soc. 124 (2002) 6480.

As is described above, oxygen-reducing electrodes using enzymes in related art employ a configuration of carrying out a reaction in a liquid and are so configured as to increase an oxygen supply to thereby improve the efficiency of electrode reaction by increasing an oxygen partial pressure or stirring the solution.

However, the procedure of increasing an oxygen partial pressure or stirring a solution so as to increase the oxygen supply is unsuitable in design, from the viewpoint of practical use of the resulting fuel cell.

Specifically, the oxygen supply is limited, because a reaction should be carried out in a static state, and the diffusion rate of dissolved oxygen is limited. It is therefore difficult to yield a large oxygen-reducing current.

Accordingly, it is desirable herein to provide a fuel cell that can yield such a reaction environment as to exhibit excellent properties as electrode sufficiently; a method of using the fuel cell; a cathode suitable for the fuel cell; and an electronic device having the fuel cell.

More generally, it is desirable to provide a device using an electrode reaction, such as a fuel cell, that can yield such a reaction environment as to exhibit excellent properties as electrode sufficiently; and an electrode for the device using an electrode reaction.

### Disclosure of the Invention

After intensive investigations to solve the problems in related art, the present inventors have discovered the direct, contact supply of a reactant as a gas to an electrode including an enzyme-immobilized electroconductive and gas-permeable material, such as an enzyme-immobilized porous material, in an enzyme-catalyzed reaction. They have experimentally verified that an enzyme actually undergoes an enzyme-catalyzed reaction with a reactant in a gaseous phase according to this technique. Use of a reactant in a gaseous phase in an enzyme-catalyzed reaction has not yet been reported, and such a reactant is essentially immersed in water or a buffer solution according to techniques in related art, as far as the present inventors know. However, by realizing the use of a reactant in a gaseous phase according to the technique, the problems can be solved at once.

The present invention has been made based on these findings.

Specifically, according to a first aspect of the present invention to solve the problems, there is provided:
a fuel cell including a cathode, an anode, and a proton conductor arranged between the cathode and the anode,
in which the cathode includes an electroconductive and gas-permeable material and an enzyme immobilized on the material, and the fuel cell is so configured as to bring at least part of the cathode into contact with a reactant in a gaseous phase.

According to a second aspect of the present invention, there is provided:
a cathode for a fuel cell, which includes an electroconductive and gas-permeable material and an enzyme immobilized on the material.

According to a third aspect of the present invention, there is provided:
an electronic device including a fuel cell, the fuel cell including a cathode, an anode, and a proton conductor arranged between the cathode and the anode,
in which the cathode of the fuel cell includes an electroconductive and gas-permeable material and an enzyme immobilized on the material, and the electronic device is so configured as to bring at least part of the cathode into contact with a reactant in a gaseous phase.

Electroconductive and gas-permeable materials for use in the first, second, and third aspects act as electrode substrates. The materials can basically be any ones, as long as they have such a satisfactory electroconductivity as to be used as electrodes and each have a gas-permeable inner structure. Among them, preferred are porous materials typically including carbon and having a high specific surface area, for yielding a satisfactory reaction area.

The cathode is so configured that at least part thereof is brought in contact with a reactant in a gaseous phase upon use. The cathode preferably lies in a wet state upon use, for carrying out a reductive reaction. More specifically, it is preferred, for example, to bring into contact and wet the enzyme with a buffer solution typically by immersing the cathode in the buffer solution so as to improve the enzymatic activity. Various reactants in a gaseous phases can be used herein. Oxygen is a representative reactant which is in a gaseous phase at ordinary temperature and normal pressure. Oxygen is generally supplied as air or oxygen gas. Oxygen is very effective for use in a reductive reaction, because it is inexhaustibly present in air and does not adversely affect the environment. Instead of or in addition to oxygen, NOₓ, for example, can be used as a reactant in a gaseous phase. Any reactants in a gaseous phase can be fundamentally applied herein, as long as they are vaporizable substances. It is also acceptable to supply a reactant in a gaseous phase as bubbles while placing the cathode in a liquid phase.

A material for a cathode preferably further carries an electron-transfer mediator immobilized thereon, in addition to an enzyme. The electron-transfer mediator originally serves to fetch electrons formed as a result of an enzymatic reaction and transfer them to the cathode. An electron-transfer mediator, if immobilized in a sufficiently high concentration on a material constituting the cathode, can be used as an electron pool for storing electrons temporarily. Specifically, bio-fuel cells in related art do not fully utilize the remainder of their power or capability when they carry out discharge at a power lower than their critical power or when they are connected to an infinite resistance. It is difficult for them to generate power equal to or higher than the critical power. In addition, temporary drop of oxygen concentration and/or fuel concentration significantly sensitively affect the output power. These problems can be solved at once by using an electron-transfer mediator as an electron pool. In this case, the electron-transfer mediator is preferably immobilized in a sufficiently high concentration on a surface of a cathode. More specifically, the electron-transfer mediator is preferably immobilized in an average amount of, for example, 0.64x 10⁻⁶ mol or more per square millimeter (unit area) of the surface of the cathode. The storage of electrons in the electron-transfer mediator has following advantages. Electrons can be temporarily stored by the electron-transfer mediator spontaneously, in other words, charging can be carried out spontaneously by maximizing the remainder of catalytic activity of an enzyme, when an infinite resistance is connected as a load to an external circuit of a bio-fuel cell or when the fuel cell supplies a low power. Even if a bio-fuel cell should yield an output (power) equal to or higher than its critical power, such power equal to or higher than the critical power can be generated by using the charged electron-transfer mediator, in addition to using the catalytic activity of the bio-fuel cell. An electron-transfer mediator serving as an electron pool may be immobilized on an anode, in addition to a cathode.

A proton conductor to be arranged between a cathode and an anode may include, for example, an electrolyte.

Electronic devices for use herein can be basically any ones and include both portable devices and stationary devices. Specific examples thereof are mobile phones, portable equipment, robots, personal computers, vehicle-mounted equipment, and various household electrical appliances.

According to a fourth aspect of the present invention, there is provided:
a method of using a fuel cell, the fuel cell including a cathode, an anode, and a proton conductor arranged between the cathode and the anode, the cathode including an electroconductive and gas-permeable material, and an enzyme and an electron-transfer mediator each immobilized on the material, the electron-transfer mediator constituting an electron pool so configured as to store electrons, the fuel cell being so configured as to carry out power generation by bringing at least part of the cathode into contact with a reactant in a gaseous phase,
the method including the step of feeding electrons from the electron pool to the cathode when a supply of the reactant to the cathode stops, when a supply of the reactant to the cathode decreases, or when an output is to be increased.

Other descriptions relating to the first, second, and third aspects of the present invention can also be applied to the fourth aspect, as long as not contrary to their properties.

According to a fifth aspect of the present invention, there is provided:
a device using an electrode reaction, including a pair of electrodes,
in which one of the pair of electrodes includes an electroconductive and gas-permeable material and an enzyme immobilized on the material, and the device is so configured as to bring at least part of the one electrode into contact with a reactant in a gaseous phase.

According to a sixth aspect of the present invention, there is provided:
an electrode for a device using an electrode reaction, which includes an electroconductive and gas-permeable material and an enzyme immobilized on the material.

Examples of a device using an electrode reaction include bio-fuel cells, biosensors, and bioreactors modeling themselves on biological metabolism. A pair of electrodes in a device using an electrode reaction corresponds to, for example, a cathode and an anode in a bio-fuel cell and to a working electrode and a counter electrode in a bioreactor, respectively.

Other descriptions relating to the first, second, and third aspects of the present invention can also be applied to the fifth and sixth aspects, as long as not contrary to their properties.

According to the present invention configured as above, a cathode including an electroconductive and gas-permeable material and an enzyme immobilized thereon is so configured as to come in contact with a reactant in a gaseous phase at least partially. By satisfying this, the enzyme immobilized on the cathode acts as a catalyst so as to induce reduction of the reactant in a gaseous phase, such as oxygen supplied typically as air or oxygen gas. According to this technique, the amount of a supplied reactant is not restricted, an enzyme-catalyzed reaction can be carried out with an excellent efficiency to thereby yield a large reduction current and to yield a practically excellent efficiency in power generation. The fuel cell or device using an electrode reaction has a simple structure.

According to the present invention, there is provided such a reaction environment as to sufficiently exhibit excellent properties as electrode of an enzyme-immobilized electrode. Accordingly, there is provided bio-fuel cells having high efficiencies, as well as other high-efficiency devices using an electrode reaction, such as biosensors and bioreactors. Such devices using an electrode reaction enables to carry out environmental remediation and decomposition of pollutants in a gaseous phase. Biosensors using this technique can select substrates within a broader range and can carry out sensing in a novel manner.

### Brief Description of the Drawings

Fig. 1 is a schematic diagram of a fuel cell according to an embodiment of the present invention.
Fig. 2 is a schematic diagram showing the configuration of electrodes in Comparative Example.
Fig. 3 is a schematic diagram showing the configuration of electrodes in Example.
Fig. 4 is a schematic diagram showing data in current-time (I-t) measurements of samples according to Comparative Example and Example, respectively.
Fig. 5 is a schematic diagram of a fuel cell according to an embodiment of the present invention.
Fig. 6 is a schematic diagram showing data in current-time (I-t) measurement using the fuel cell.
Fig. 7 is a schematic diagram showing data in current-time (I-t) measurement at a varying concentration of an electron-transfer mediator.
Fig. 8 is a schematic diagram showing a more practically suitable configuration of a fuel cell according to an embodiment of the present invention.

### Best Mode for Carrying Out the Invention

An embodiment of the present invention will be illustrated with reference to the attached drawings.

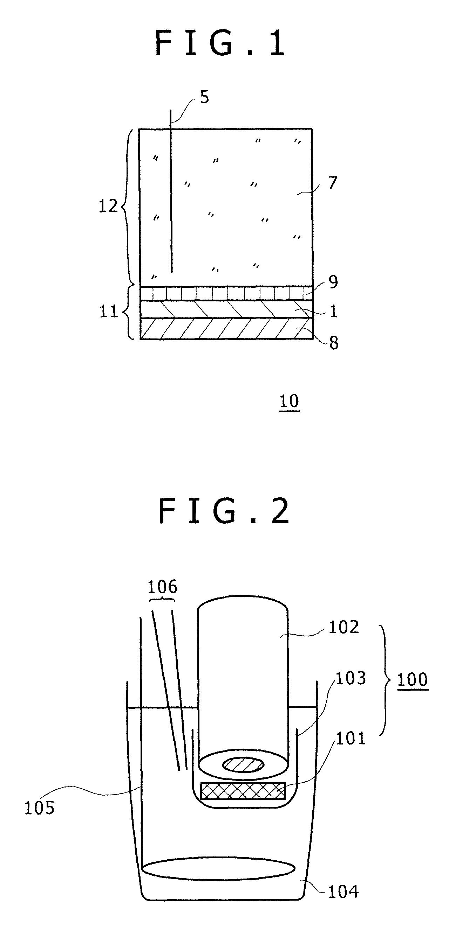

Fig. 1 shows a fuel cell according to an embodiment of the present invention.

With reference to Fig. 1, a fuel cell 10 according to an embodiment includes a first component 11 and a second component 12. The first component 11 includes a cathode (positive electrode) 1. The second component 12 includes an anode (negative electrode) 5. The fuel cell further includes an electrolyte solution 7 as a proton conductor arranged between the pair of electrodes (anode and cathode).

The cathode 1 includes an enzyme-immobilized electrode. This electrode includes a porous material made typically of carbon, and an enzyme immobilized on a surface of the porous material facing the electrolyte solution 7. The enzyme can be, for example, an enzyme having an oxidase activity and using oxygen as a reactant, such as laccase, bilirubin oxidase, or ascorbate oxidase. The porous material preferably further carries an electron-transfer mediator immobilized thereon, in addition to an enzyme. An electron-transfer mediator is more preferably immobilized in a sufficiently high concentration, for example, in an average amount of 0.64x 10⁻⁶ mol/mm² or more. Any known or conventional procedure can be used for immobilizing the enzyme and electron-transfer mediator. In particular, immobilization procedures that are susceptible to pH or ionic strength of water or a buffer solution used in related art can be used in the present invention.

In the first component 11, the cathode 1 carrying an immobilized enzyme is assembled with a current collector 8 made typically of a titaniummesh. According to this structure, current collection can be easily carried out.

The anode 5 can be any electrode that is capable of supplying proton (H⁺), such as a hydrogen-platinum electrode or a methanol-ruthenium-platinum electrode.

The anode 5 is arranged in the electrolyte solution 7 in the second component 12. Where necessary, a reference electrode (not shown) is also arranged in the electrolyte solution 7.

The electrolyte solution 7 may generally be a strongly acidic solution such as a sulfuric acid solution, or a strongly basic solution such as a potassium hydroxide solution. This bio-fuel cell, however, can also work under mild, neutral conditions, because an enzyme immobilized as a catalyst on the cathode 1 exhibits a catalytic activity even at a pH of around 7, and the bio-fuel cell can use a buffer solution or water having a pH of around 7.

The first component 11 and the second component 12 are separated from each other by the action of a separator 9. The separator 9 includes an insulative and proton-permeable membrane made typically of cellophane (methylcellulose). This prevents the electrolyte solution 7 from migrating into the cathode 1.

The fuel cell 10 is so configured as to bring the cathode 1 into contact with a reactant in a gaseous phase. Accordingly, the cathode 1 is brought in contact with a reactant by placing at least part of the cathode 1 in a gaseous phase. The cathode 1 includes a porous material, and this allows the reactant in a gaseous phase in contact with the cathode 1 to penetrate the cathode 1 to thereby react with an enzyme immobilized on the porous material.

The fuel cell 10 is configured as follows. The cathode 1 is fed with oxygen (O₂) from a gaseous phase in contact with the cathode 1 and is also fed with H⁺ from the electrolyte solution 7. This induces the following reaction (1) by the catalysis of the enzyme immobilized on the cathode 1. In the anode 5, there occurs the following reaction (2) when the anode 5 is a methanol-ruthenium-platinum electrode, and there occurs the following reaction (3) when the anode 5 is a hydrogen-platinum electrode. Thus, electrons are exchanged and thereby a current passes between the cathode 1 and the anode 5 through an external circuit.

It has been verified that an oxygen-reducing reaction in the cathode 1 satisfactorily proceeds in a wet state.

Cathode: O₂+4H⁺ +4e⁻ → 2H₂O (1)

Anode (methanol-ruthenium-platinum electrode): CH₃OH+H₂O → CO₂+6H⁺+6e⁻ (2)

Anode (hydrogen-platinum electrode): H₂ → 2H⁺+2e⁻ (3)

Specific samples of a fuel cell according to an embodiment of the present invention, and an enzyme-immobilized electrode (positive electrode) as a cathode for constituting the fuel cell were prepared and were evaluated.

The reactivities of following samples were determined upon use of dissolved oxygen in a buffer solution as a reactant and upon use of oxygen in a gaseous phase as a reactant, respectively.

To determine whether or not an electrode carrying an immobilized enzyme for reducing a reactant (oxygen) actually uses oxygen in a gaseous phase as the reactant, the enzyme-immobilized electrode should have a catalytic reaction rate sufficiently higher than the diffusion rate of dissolved oxygen.

In samples shown below, therefore, bilirubin oxidase and potassium hexacyanoferrate were used as an enzyme and an electron-transfer mediator, respectively. These were immobilized on a surface of an electrode by the action of an electrostatic interaction of poly-L-lysine.

The resulting enzyme-immobilized electrode is known to have a very high oxygen-reducing capability, in which the diffusion of dissolved oxygen in a solution acts as a rate-limiting factor (Nakagawa, T., Tsujimura, S., Kano, K., and Ikeda, T. Chem. Lett., 32 (1), 54-55 (2003)).

Initially, an enzyme-immobilized electrode was prepared in the following manner.

A commercially available carbon felt (the product of TORAY Industries, Inc.; B0030) was used as a porous material, and this carbon felt was punched into a round piece having a diameter of 6 mm.

Next, the carbon felt was impregnated sequentially with 20 µl of poly-L-lysine (1 percent by weight), 10 µl of hexacyanoferrate ion (10 mM) as an electron-transfer mediator, and 10 µl (100 mg/ml) of a solution of bilirubin oxidase (derived from *Myrothecium Verrucaria),* was dried, and thereby yielded an enzyme-immobilized electrode.

### [Comparative Example]

In this comparative example, a system of measurement having a configuration of electrodes as shown in Fig. 2 was assembled.

An enzyme-immobilized electrode 101 prepared in the above manner was physically fixed to a commercially available glassy carbon electrode 102 (the product of Bioanalytical Systems, Inc.; No. 002012) using a fixing device 103 made from a nylon net to thereby constitute a working electrode 100. This has such a structure as to carry out current collection easily.

Fig. 2 illustrates the enzyme-immobilized electrode 101 as lying away from the glassy carbon electrode 102, for the sake of visual observation of the tip of the glassy carbon electrode 102. In an actual configuration, however, the enzyme-immobilized electrode 101 lies in physical contact with the glassy carbon electrode 102.

The electrode having the configuration was immersed in a buffer solution 104 saturated with oxygen. Then a counter electrode 105 including a platinum wire, and a reference electrode (Ag/AgCl) 106 were arranged at predetermined positions.

### [Example]

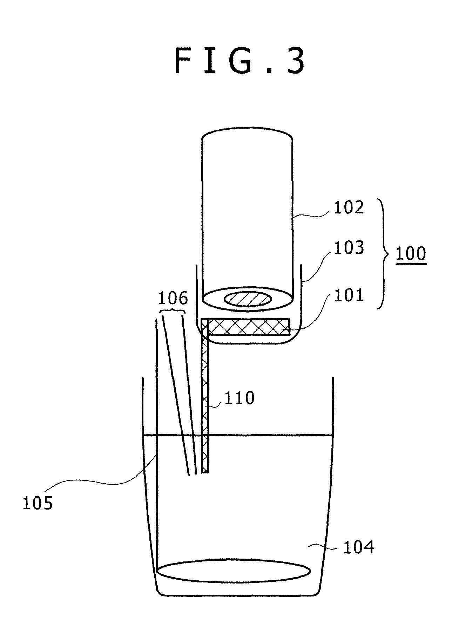

In this example, a system of measurement having a configuration of electrodes as shown in Fig. 3 was assembled.

An enzyme-immobilized electrode 101 prepared in the above manner was physically fixed to a commercially available glassy carbon electrode 102 (the product of Bioanalytical Systems, Inc.; No. 002012) using a fixing device 103 made from a nylon net to thereby constitute a working electrode 100. This has such a structure as to carry out current collection easily.

Fig. 3 illustrates the enzyme-immobilized electrode 101 as lying away from the glassy carbon electrode 102, for the sake of visual observation of the tip of the glassy carbon electrode 102. In an actual configuration, however, the enzyme-immobilized electrode 101 lies in physical contact with the glassy carbon electrode 102.

The electrode having this configuration was arranged out of a buffer solution 104 so as to be in contact with air. The enzyme-immobilized electrode 101 was connected to the buffer solution 104 through a lead 110 made from a carbon felt. Thus, a system of electrochemical measurement was configured.

Then a counter electrode 105 including a platinum wire, and a reference electrode (Ag/AgCl) 106 were arranged at predetermined positions.

Electrochemical measurements were conducted on the systems of measurement having configurations shown in Fig. 2 and Fig. 3, respectively.

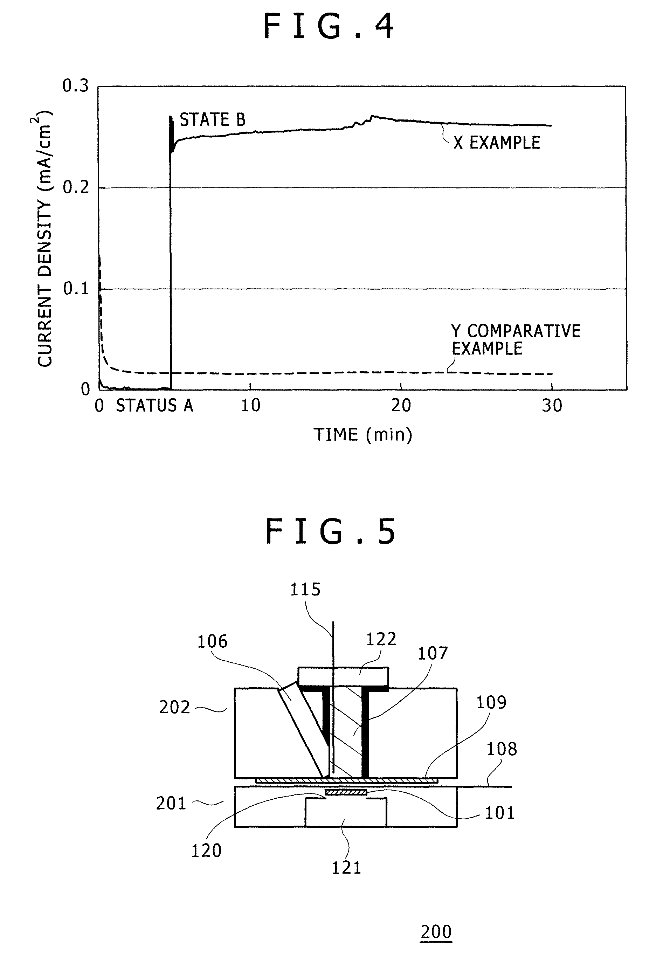

Specifically, current-time (I-t) measurements were carried out at a constant voltage of 0.1 V. The results are shown Fig. 4. In a sample according to Comparative Example having the configuration shown in Fig. 2, a catalytic current as a result of oxygen reduction gradually decreased and finally reached 17 µA/cm², as indicated by the broken line Y. This is because the enzyme-immobilized electrode 101 has such high performance as to exceed the amount of dissolved oxygen in the buffer solution 104, and oxygen begins being exhausted following the beginning of measurement.

In contrast, in a sample according to Example, a current as a result of catalytic action was 3 µA/cm² when the lead 110 made of carbon felt was immersed in the buffer solution 104 (State A of the solid line X in Fig. 4).

Next, the enzyme-immobilized electrode 101 was wetted with the buffer solution 104 to thereby activate the enzyme slightly. As a result, a very high current density of 266 µA/cm² was obtained (State B of the solid line X in Fig. 4).

This is because the oxygen concentration in a gaseous phase is much higher than the concentration of dissolved oxygen in the buffer solution 104, and the enzyme-immobilized electrode 101 acts to reduce oxygen in a gaseous phase highly efficiently.

These results demonstrate that a reaction can be carried out with excellent efficiency using an enzyme immobilized on an enzyme-immobilized electrode 101 and oxygen in a gaseous phase.

### [Fuel cell]

Next, the above-prepared enzyme-immobilized electrode 101 was applied as a cathode of a fuel cell by utilizing an oxygen-reducing reaction thereof, and performance as a cell was evaluated.

With reference to Fig. 5, a fuel cell 200 structurally includes an enzyme-immobilized electrode 101 as a cathode (positive electrode), an anode (negative electrode) 115 containing a methanol-ruthenium-platinum electrode, and an electrolyte solution 107. The enzyme-immobilized electrode 101 and the anode 115 face each other with the interposition of the electrolyte solution 107.

The enzyme-immobilizedelectrode 101 as a cathode was prepared by cutting a carbon felt into a 10-mm square piece, and immobilizing an enzyme thereon by the procedure of Example.

With reference to Fig. 5, an enzyme-immobilized electrode 101 was placed over a continuous hole 120 in an electrode contact region 121 in a cell lower part 201. Next, a titanium mesh as a current collector 108 was placed on the enzyme-immobilized electrode 101 and thereby yielded a working electrode having such a structure as to carry out current collection easily. An insulative and proton-permeable predetermined film, such as a cellophane (methylcellulose) film, as a separator 109 was then arranged on the enzyme-immobilized electrode 101 so as to separate the same from a cell upper part 202.

In the cell upper part 202, an anode 115 including a methanol-ruthenium-platinum electrode was arranged in an electrolyte solution 107, and a reference electrode 106 was arranged so as to be in contact with the electrolyte solution 107. These anode 115 and reference electrode 106 have sufficiently large reaction surface areas. The reference numeral 122 indicates a lid.

The separator 109 is so configured as to prevent the electrolyte solution 107 from seeping out of the cell upper part 202. The enzyme-immobilized electrode 101 as a cathode lies in a gaseous phase.

In the fuel cell 200 having the above configuration, the enzyme-immobilized electrode 101 as a cathode is fed with oxygen (O₂) from a gaseous phase in contact with the enzyme-immobilized electrode 101 and is also fed with H⁺ from the electrolyte solution 107. This induces the following reaction (1) by the catalysis of the enzyme immobilized on the enzyme-immobilized electrode 101. In the anode 115, there occurs the following reaction (2). Thus, electrons are exchanged and thereby a current passes between the enzyme-immobilized electrode 101 as a cathode and the anode 115 through an external circuit.

Cathode: O₂+4H⁺+4e⁻ → 2H₂O (1)

Anode: CH₃OH+H₂O → CO₂+6H⁺+6e⁻ (2)

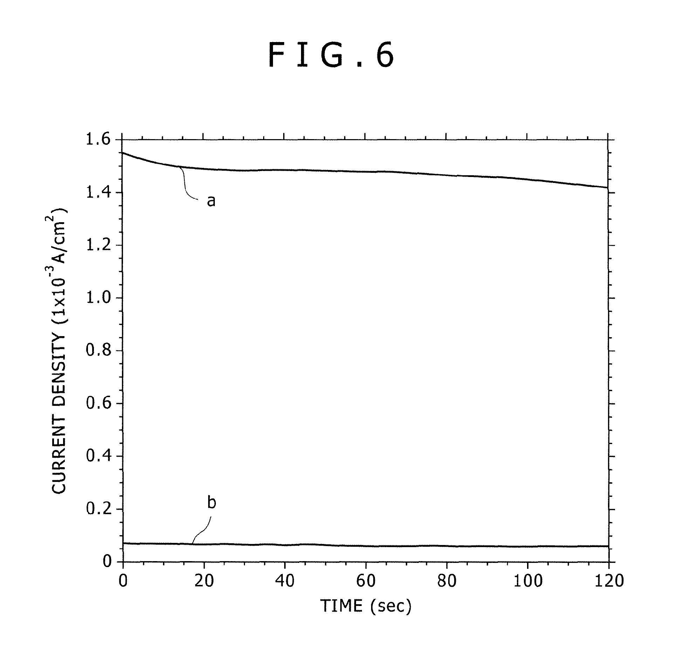

Air was fed to the electrode contact region 121 so as to feed oxygen to the enzyme-immobilized electrode 101 as a cathode through the continuous hole 120 (Fig. 5). Under this condition, a current-time (I-t) measurement at a voltage of 0.1 V was carried out. The result is shown as Curve "a" in Fig. 6.

In this case, oxygen in a gaseous phase acted as a reactant, and an oxygen-reducing current was observed following the placement of the electrolyte solution 107 in the cell upper part 202, and a stationary catalytic current of 1.5 mA/cm² was obtained as indicated at the left end of Curve "a" in Fig. 6.

In contrast, another current-time (I-t) measurement at a voltage of 0.1 V was carried out while an electrolyte solution was placed in the electrode contact region 121 (Fig. 5) so as to fully immerse the enzyme-immobilized electrode 101 as a cathode in the electrolyte solution. The result is shown as Curve "b" in Fig. 6.

In this case, the catalytic current decreased following the beginning of the measurement and became constant at 50 µA/cm² as indicated at the left end of Curve "b" in Fig. 6. This is because dissolved oxygen in the electrolyte solution acts as a reactant, and the diffusion of dissolved oxygen causes the decrease in catalytic current.

These results verify that a fuel cell using an enzyme-immobilized electrode 101 as a cathode is so configured as to efficiently reduce oxygen in a gaseous phase to thereby yield a current density as high as 30 times that of a fuel cell in related art using dissolved oxygen in an electrolyte solution as a reactant.

Next, described is another experimental example. In this experimental example, the concentration of an electron-transfer mediator to be immobilized together with an enzyme on a cathode of a fuel cell was varied, an electron pool constituted by the electron-transfer mediator was filled with electrons, and a current was measured continuously with elapse of time from the stoppage of oxygen supply to the cathode. The result is described below.

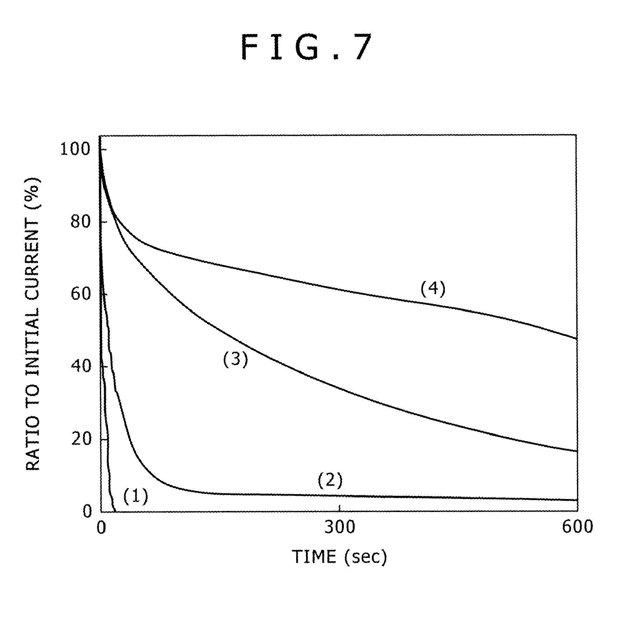

To carry out the experiment, bilirubin oxidase as an enzyme and hexacyanoferrate ion (Fe(CN)₆^{3-/4-}) as an electron-transfer mediator were immobilized on a 5-mm square carbon felt by the electrostatic interaction of poly-L-lysine as a polycation, to thereby yield an electrode. The electrode as a single electrode was evaluated. The results are shown in Fig. 7. In Fig. 7, Curve (1) shows the result of a comparative example, in which a platinum catalyst was used in a cathode. Curve (2) shows the result of a sample in which an electron-transfer mediator was immobilized to the carbon felt in an amount of 1.6x 10⁻⁶ mol (in terms of an average concentration of 0. 64x 10⁻⁷ mol/mm²), in addition to the enzyme. Curve (3) shows the result of a sample in which an electron-transfer mediator was immobilized to the carbon felt in an amount of 1. 6x 10⁻⁵ mol (in terms of an average concentration of 0.64x 10⁻⁶ mol/mm²), in addition to the enzyme. Curve (4) shows the result of a sample in which an electron-transfer mediator was immobilized to the carbon felt in an amount of 1.6x 10⁻⁴ mol (in terms of an average concentration of 0. 64x 10⁻⁵ mol/mm²), in addition to the enzyme. Fig. 7 demonstrates that the sample using a platinum catalyst in the cathode (Curve (1)) showed a current which dropped to zero about 20 seconds after the stoppage of oxygen supply. The sample using the immobilized electron-transfer mediator in an amount of 1.6x 10⁻⁶ mol (in terms of an average concentration of 0.64x 10⁻⁷ mol/mm²) (Curve (2)) showed a current which dropped about several tens of seconds after the stoppage of oxygen supply and reached about 5% of the initial current about 100 seconds later. In contrast, the sample using the immobilized electron-transfer mediator in an amount of 1. 6x 10⁻⁵ mol (in terms of an average concentration of 0.64x 10⁻⁶ mol/mm²) (Curve (3)) showed a gradually decreased current after the stoppage of oxygen supply and maintained a current of about 20% of the initial current even 600 seconds later. The sample using the immobilized electron-transfer mediator in an amount of 1. 6x 10⁻⁴ mol (in terms of an average concentration of 0.64x 10⁻⁵ mol/mm²) (Curve (4)) showed a more gradually decreased current after the stoppage of oxygen supply and maintained a current of about 50% of the initial current even 600 seconds later. Although only the data up to 600 seconds (10 minutes) are shown in Fig. 7, the sample indicated by Curve (2) showed currents 2%, 1%, and 1% of the initial current 30 minutes, 1 hour, and 2 hours later, respectively; the sample indicated by Curve (3) showed currents 6.3%, 5%, and 3% of the initial current 30 minutes, 1 hour, and 2 hours later, respectively; and the sample indicated by Curve (4) showed currents 25%, 18.9%, and 14.1% of the initial current 30 minutes, 1 hour, and 2 hours later, respectively. These samples can maintain a high current over a long time. This is because they use a cathode carrying an immobilized electron-transfer mediator in a high concentration; and the immobilized electron-transfer mediator in a high concentration acts as an electron pool to store electrons temporarily; and the electrons temporarily stored in the electron-pool pass through an external circuit, in addition to electrons formed as a result of an enzymatic reaction.

These results demonstrate that a current can be maintained at high level over a long time even after the stoppage of oxygen supply to a cathode, by immobilizing an electron-transfer mediator to the cathode in an average amount of 0.64x 10⁻⁶ mol/mm² or more.

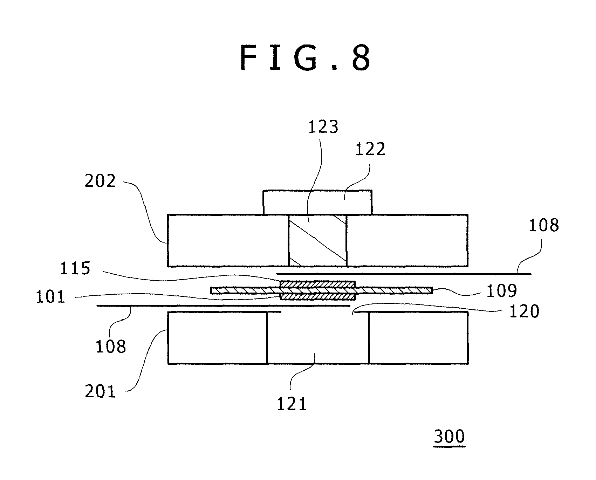

Fig. 8 shows a fuel cell 300 having a more practically suitable configuration. Components in Fig. 8 identical to or corresponding to those in Fig. 5 have the same reference numerals, and overlapped description will be omitted as appropriate.

With reference to Fig. 8, the fuel cell 300 structurally includes an enzyme-immobilized electrode 101 as a cathode (positive electrode), an anode (negative electrode) 115, and a separator 109 as a proton conductor. The enzyme-immobilized electrode 101 and the anode 115 face each other with the interposition of the separator 109. In this case, the separator 109 includes a proton-conductive film such as a cellophane film. The anode 115 lies in contact with a fuel 123. The fuel 123 can be any of various fuels such as glucose. Current collectors 108 are arranged below the enzyme-immobilized electrode 101 and above the anode 115, so as to carry out current collection easily.

Heretofore, an embodiment and examples have been explained specifically. However, the invention is not limited to the embodiment and examples, but contemplates various changes and modifications based on the technical concept of the invention.

For example, numerical values, structures, configurations, shapes, materials, and so on are not but mere examples, and any other appropriate numerical values, structures, configurations, shapes, materials, and so on may be employed, if necessary.

## Claims

1. A fuel cell comprising a cathode, an anode, and a proton conductor arranged between the cathode and the anode,
wherein the cathode includes an electroconductive and gas-permeable material and an enzyme immobilized on the material, and wherein the fuel cell is so configured as to bring at least part of the cathode into contact with a reactant in a gaseous phase.

2. The fuel cell according to Claim 1, wherein the electroconductive and gas-permeable material comprises a porous material.

3. The fuel cell according to Claim 1, wherein the fuel cell is so configured as to bring the cathode in a wet state.

4. The fuel cell according to Claim 1, further comprising an electron-transfer mediator immobilized on the electroconductive and gas-permeable material, in addition to the enzyme.

5. The fuel cell according to Claim 4, wherein the electron-transfer mediator is so configured as to store electrons and to constitute an electron pool.

6. The fuel cell according to Claim 5, wherein the electron-transfer mediator is immobilized in an average amount of 0.64x 10⁻⁶ mol/mm² or more.

7. The fuel cell according to Claim 5, wherein the fuel cell is so configured as to store electrons in the electron pool spontaneously when the fuel cell is connected to an infinite resistance as a load or when the fuel cell supplies a low electric power.

8. A method of using a fuel cell, the fuel cell including a cathode, an anode, and a proton conductor arranged between the cathode and the anode, the cathode including an electroconductive and gas-permeable material, and an enzyme and an electron-transfer mediator each immobilized on the material, the electron-transfer mediator constituting an electron pool so configured as to store electrons, the fuel cell being so configured as to carry out power generation by bringing at least part of the cathode into contact with a reactant in a gaseous phase,
the method comprising the step of feeding electrons from the electron pool to the cathode when a supply of the reactant to the cathode stops, when a supply of the reactant to the cathode decreases, or when an output is to be increased.

9. A cathode for a fuel cell, comprising an electroconductive and gas-permeable material and an enzyme immobilized on the material.

10. The cathode for a fuel cell according to Claim 9, further comprising an electron-transfer mediator immobilized on the electroconductive and gas-permeable material, in addition to the enzyme.

11. An electronic device comprising a fuel cell, the fuel cell including a cathode, an anode, and a proton conductor arranged between the cathode and the anode,
wherein the cathode of the fuel cell includes an electroconductive and gas-permeable material and an enzyme immobilized on the material, and wherein the electronic device is so configured as to bring at least part of the cathode into contact with a reactant in a gaseous phase.

12. A device using an electrode reaction, comprising a pair of electrodes,
wherein one of the pair of electrodes includes an electroconductive and gas-permeable material and an enzyme immobilized on the material, and wherein the device is so configured as to bring at least part of the one electrode into contact with a reactant in a gaseous phase.

13. The device using an electrode reaction according to Claim 12, further comprising an electron-transfer mediator immobilized on the electroconductive and gas-permeable material, in addition to the enzyme.

14. The device using an electrode reaction according to Claim 12, as one of a bio-fuel cell, a biosensor, and a bioreactor.

15. An electrode for a device using an electrode reaction, comprising an electroconductive and gas-permeable material and an enzyme immobilized on the material.
